# EUROPÄISCHE PATENTSCHRIFT

(11) **EP 0 629 255 B1**
(45) Veröffentlichungstag und Bekanntmachung des Hinweises auf die Patenterteilung: **26.03.1997**
(21) Anmeldenummer: 93905745.1
(22) Anmeldetag: 26.02.1993
(51) Int. Cl.: E04H 6/14, B65G 1/127

(54) **MECHANISCHER ANTRIEB EINES ABLAGESYSTEMS**
MECHANICAL DRIVE FOR A STORAGE SYSTEM
ENTRAINEMENT MECANIQUE POUR SYSTEMES DE RANGEMENT

(30) Priorität: 05.03.1992 CS 651/92
(43) Veröffentlichungstag der Anmeldung: 21.12.1994
(73) Patentinhaber: VIHORLAT, A.S., 069 023 Snina (SK)
(72) Erfinder: PETRAS , Vladimir, 069 01 Snina (SK); KISLAN, Jozef, 069 01 Snina (SK); FECKO, Frantisek, 069 01 Snina (SK)
(74) Vertreter: Tschudi, Lorenz
(86) Internationale Anmeldenummer: SK9300002
(87) Internationale Veröffentlichungsnummer: WO9318251

(56) Entgegenhaltungen:
- AU-B- 8 820 454
- FR-A- 1 251 246
- FR-A- 1 319 087
- US-A- 2 794 559
- US-A- 3 197 045

## Beschreibung

Die Erfindung betrifft einen mechanischen Antrieb für ein Ablagesystem gemäss dem Oberbegriff des Patentanspruchs 1.

Die klassischen Lösungen von Lagerplätzen und Ablagesystemen für die Lagerung verschiedener Waren in Geschäftszentren, Produktionsunternehmen sowie auch die Lösungen von Ablagesystemen in Form von Parkplätzen für das Parken von Autos, haben gewöhnlich feste Konstruktionen mit Ablageflächen (für die Waren oder Autos) und Zufahrtswege für den Materialnachschub, dessen Wegbeförderung und für die Manipulation mit der Ware. Es sind auch Lösungen von Ablageplätzen nach dem Prinzip von Transportbändern bekannt, wo man die Ware auf dem Transportband lagert und sie durch Verfahren des Transportbandes aufsucht, wobei nach der Identifikation der gesuchten gelagerten Ware diese auf den gewünschten Platz befördert wird. Die Bewegung der Transportbänder besorgen Antriebe, die auf verschiedenen Prinzipien arbeiten.

In der Patentschrift US-A 2 794 559 ist ein Ablagesystem beschrieben, das zum Parken von Automobilen dient. Es besteht aus einer Stahlkonstruktion, in der die profilierte Fahrbahn befestigt ist, durch die sich in mehreren Lagen übereinander ein zusammengesetztes Transportband bewegt; es wird durch Zellen gebildet, die zum Einparken der Automobile dienen und untereinander durch Stäbe verbunden sind. Die Fahrbahn ist aus geraden Abschnitten in jeder Lage zusammengesetzt und aus einer gekrümmten Bahn, die den Uebergang von einer Lage zur anderen ermöglicht. Die Zelle bewegt sich an zwei Fahrgestellen, gegenüber denen sie in gedrehter Richtung angebracht ist: das ermöglicht ihr den Uebergang durch die gekrümmte Bahn, wobei der Schwerpunkt der beladenen Zelle immer auf der Vertikalen liegt.

Der mechanische Antrieb dieses Ablagesystems wird in jedem gekrümmten Teil der Fahrbahn realisiert, wo das Transportband von Lage zu Lage durchgeht, und zwar durch ein Paar Antriebsketten, die ein Paar von Antriebsrädern mit Ausnehmungen in Drehung versetzen. Die Ausnehmungen der sich drehenden Antriebsräder hängen sich in das Gehänge der untereinander zu einem Transportband verbundenen Zellen ein und versetzen so das gesamte Transportband in Bewegung.

Bei einer solchen Anordnung sind die aktiven Antriebselemente Antriebsräder mit Ausnehmungen, die so gleichzeitig auch die Form der gekrümmten Fahrbahn bestimmen, welche die Form eines Halbkreises haben muss. Die Grösse der Antriebsräder ist von der Länge der Verbindungsstäbe abgeleitet, die von der Grösse der Zelle und dem Zwischenraum zwischen den Zellen beeinflusst werden. Die Ausmasse der Zelle gehen von den Parametern der eingeparkten Automobile aus. Der Durchmesser der Antriebsräder mit Ausnehmungen erscheint so unverhältnismässig gross im Vergleich zu der Grösse der Zelle: gleichzeitig bestimmt er auch die Höhe der Lage des Ablagesystems. Bei mehrstöckigen Ablagesystemen kommt es dann zum Anwachsen des Höhenanteiles an ungenützten Raum an der Gesamthöhe des Ablagesystems.

Die Grösse der Antriebsräder mit Ausnehmungen beeinflusst die für den Antrieb des Transportbandes notwendige Leistung, die bei sich vergrösserndem Durchmesser der Antriebsräder mit den Ausnehmungen wächst.

Die Produktion von Antriebsrädern mit Ausnehmungen grosser Ausmasse ist technologisch anspruchsvoll.

Bedingung für die richtige Funktion des Ablagesystems ist die genaue Einstellung der Antriebe, die mit grosser Genauigkeit eingestellt werden müssen.

Die mangelnde Sicherstellung der Einstellung der einzelnen Antriebe hat zur Folge, dass sich die Bewegung der Zellen nicht entlang der bestimmten Bahn realisiert, was die Erhöhung der Traktionswiderstände und eine Belastung auf die Fahrbahn zur Folge haben wird.

Die Aufgabe der Erfindung besteht nun darin, einen Antrieb für ein Ablagesystem zu schaffen, mit welchem die oben aufgeführten Mängel bestehender Systeme vermieden werden.

Erfindungsgemäss erfolgt die Lösung dieser Aufgabe durch die in der Kennzeichnung des Anspruchs 1 angegebenen Merkmale.

Damit wird in optimaler Weise der erforderliche Antrieb der Zellen im Ablagesystem erreicht.

Für die richtige Funktion ist es vorteilhaft, dass das Profil des Antriebsblockes, das in den Verbindungsstab eingreift und damit auch das Profil der Ausnehmungen im Verbindungsstab, den Bedingungen der Abwälzung der zwei Profile entspricht.

Weiters ist es vorteilhaft, eine Kettenübersetzung zu benutzen, die durch vier Kettenräder und durch eine Walzenkette mit Antriebsblöcken gebildet wird in einer solchen Anordnung, dass es zum gleichzeitigen Eingriff der Antriebsblöcke der Kette in die Verbindungsstäbe des zusammengesetzten Transportbandes bzw. Transporteurs kommt, das die Zellen fortbewegt, die sich in den zwei übereinander liegenden Lagen in entgegengesetzter Richtung bewegen. Bei einer solchen Anordnung sind die Verbindungsstäbe mittels gleichzeitigen Eingriffs der Antriebsblöcke von beiden Seiten angetrieben. Durch diese Lösung erhalten wir eine gleichmässige Verteilung der Belastung auf die Verbindungsstäbe, die Walzenketten und die Antriebsblöcke.

Die Veränderung der Neigung und das Ausschwingen der Zellen bei exzentrischem Parken der Automobile und durch dynamische Kräfte hat keinen Einfluss auf den richtigen Eingriff der Antriebsblöcke in die Verbindungsstäbe.

In jedem Punkt der Fahrbahn wird die Zelle durch ein zusammengesetztes Transportband fortbewegt.

Der gleichzeitige Eingriff der Antriebsblöcke in die Verbindungsstäbe des zusammengesetzten Transportbandes in den übereinanderliegenden Lagen eliminiert das Problem einer unrichtigen Anordnung der Antriebe bei der bisherigen Lösung und bewirkt, dass der Uebergang der Zellen von Lage zu Lage in der vorbestimmten Bahn stattfindet. Es werden die Traktionswiderstände und die Belastung der Bahn verringert.

Die Unterbringung der Antriebe ausserhalb des gekrümmten Teiles der Bahn ermöglicht die Herabsetzung der Bauhöhe der Lagen. Die Form der gekrümmten Bahn verändert sich von einem Halbkreis zu einer Halbellipse, wodurch die unausgenützte Höhe der Lage verringert wird.

Die Erfindung wird mittels nachfolgender Beschreibung eines Ausführungsbeispiels mit Bezugnahme auf die beigefügte Zeichnung deutlich gemacht, worin die Abb. 1 die Einrichtung gemäss der Erfindung zeigt, bei der in jeder Lage des Ablagesystems mindestens in einem Bereich vor der gekrümmten Bahn ein Antrieb befestigt ist, der ein die Zellen fortbewegendes Transportband antreibt. Abb. 2 zeigt einen mechanischen Antrieb, gebildet durch zwei Kettenräder und eine Kette mit Antriebsblöcken, die in die Verbindungsstäbe eingreifen. Abb. 3 zeigt einen mechanischen Antrieb, gebildet durch vier Kettenräder und einer Kette mit Antriebsblöcken, die gleichzeitig in die Verbindungsstäbe des zusammengesetzten Transportbandes in zwei übereinanderliegenden Lagen eingreifen. Schliesslich zeigt Abb. 4 ein Detail des Eingreifens der Antriebsblöcke in die Ausnehmungen des Verbindungsstabes von beiden Seiten.

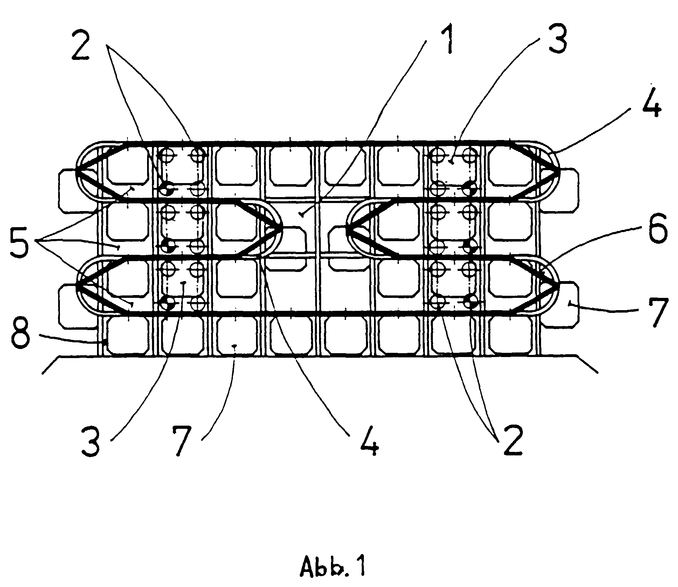

Die Einrichtung laut Abb. 1 zeigt die Anordnung der mechanischen Antriebe 2, des möglichen Ablagesystems 1, die in den Bereichen 3 einer jeden Lage 5 untergebracht sind, ausser in der Lage 8, die zum Parken bestimmt ist; und die das zusammengesetzte Transportband 6 betreiben, das die Zellen 7 befördert, die sich entlang den geraden Abschnitten 20 und gekrümmten Bahnen 4 der Fahrbahn des Ablagesystems 1 bewegen. Der Bereich 3 der Lage 5 des Ablagesystems 1 ist dadurch gekennzeichnet, dass er im Feld vor der gekrümmten Bahn 4 liegt, in der sich die Verbindungsstäbe 9 des zusammengesetzten Transportbandes 6 nur in gerader Richtung bewegen.

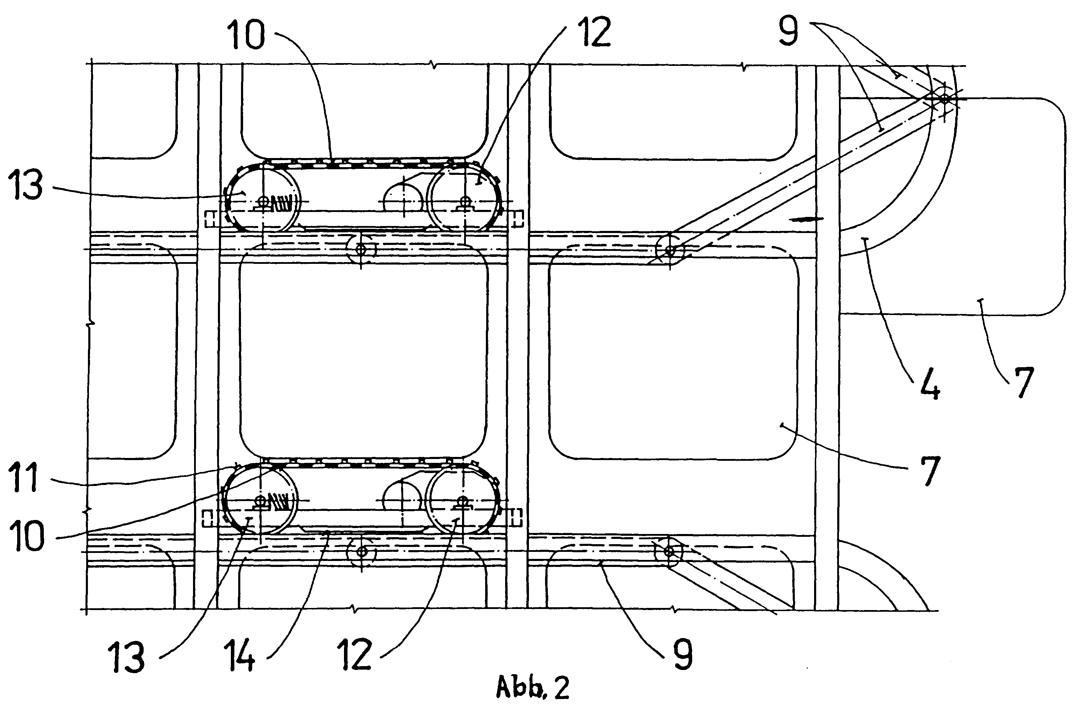

Die Abb. 2 zeigt den mechanischen Antrieb 2 des Ablagesystems 1, der durch eine Walzenkette 10 mit den Antriebsblöcken 11 gebildet ist und mittels eines Antriebs-Kettenrades 12 und dem Anspannungs-Kettenrad 13 angetrieben wird. Die Antriebsblöcke 11 greifen in die Verbindungsstäbe 9 des zusammengesetzten Transportbandes 6 ein, wodurch die Zellen 7 fortbewegt werden. Das Herausfallen der Antriebsblöcke 11 aus dem Eingriff im Verbindungsstab 9 verhindert die Führungsleiste 14, die gleichzeitig die tangentiale Komponente der Antriebskraft auffängt.

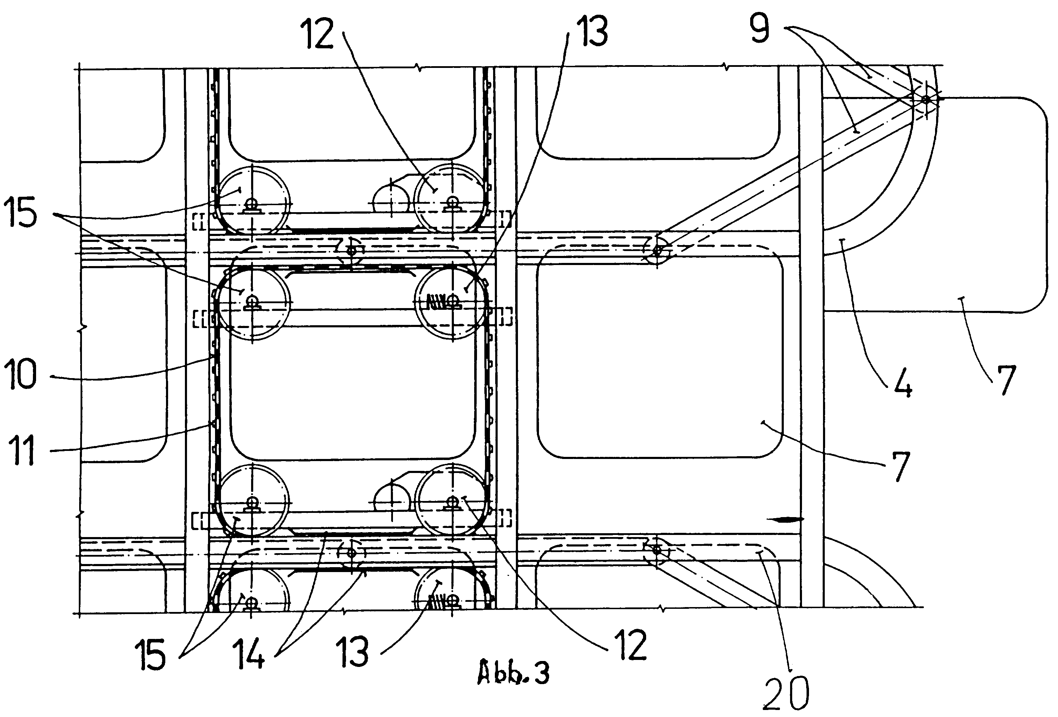

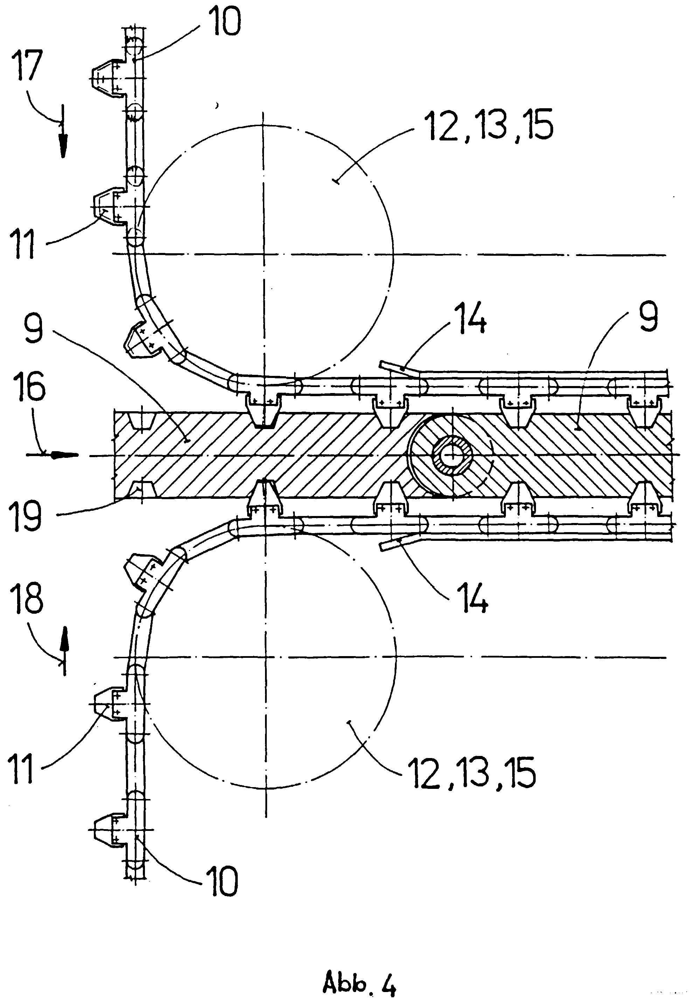

Abb. 3 zeigt die günstigste Anordnung des mechanischen Antriebs 2 laut der Erfindung. Der mechanische Antrieb 2 ist durch eine Walzenkette 10 realisiert, die die Antriebsblöcke 11 fortbewegt, die durch ein Antriebskettenrad 12 angetrieben wird, die über die Ueberführungskettenräder 15 verläuft und durch ein Anspannungskettenrad 13 angespannt wird. Die Antriebsblöcke 11 greifen gleichzeitig in die Verbindungsstäbe 9 des zusammengesetzten Transportbandes 6 in zwei übereinanderliegende Lagen 5, 8 ein. Die Verbindungsstäbe 9 des zusammengesetzten Transportbandes 6 sind so von beiden Seiten angetrieben, wie aus Abb. 4 ersichtlich ist. Eine solche Lösung der Antriebe gewährleistet die momentan richtige gegenseitige Stellung der Zellen 7 in jeder Lage 5, 8. Sie eliminiert die Probleme, die mit der richtigen Arretierung der Antriebe und der elektronischen Synchronisierung verbunden sind, wobei diese auf mechanische Art realisiert wird. Die Verbindungsstäbe 9 der niedrigsten und der höchsten Lage werden nur von einer Seite angetrieben. Die Walzenkette 10 wird durch Führungsleisten 14 geleitet.

Die Abb. 4 zeigt den beidseitigen Eingriff der Antriebsblöcke 11 der Walzenketten 10 in die Ausnehmungen 19 in den Verbindungsstäben 9. Das Profil des Antriebsblocks 11 und der Ausnehmung 19 im Verbindungsstab 9 ist durch die Bedingung der Abwälzung der zwei Profile gegeben, was für den richtigen Eingriff in der Phase des Durchgangs des Antriebsblocks 11 der Walzenkette 10 durch das Kettenrad 12, 13, 15 und bei gleichzeitigem Eingriff in die Ausnehmung 19 des Verbindungsstabes 9 Bedeutung hat. Bei der angeführten Richtung 16 der Bewegung der Verbindungsstäbe 9 sind die Richtungen der Bewegung 17, 18, der Walzenketten 10 abgebildet. Die Führungsleisten 14 verhindern das Herausfallen des Antriebsblockes 11 aus dem Eingriff in den Ausnehmungen 19 und fangen gleichzeitig die tangentiale Komponente der Antriebskraft auf.

## Patentansprüche

1. Mechanischer Antrieb in einem Ablagesystem (1), das durch eine eine Fahrbahn tragende Stahlkonstruktion gebildet ist, und die Fahrbahn aus mehreren übereinander verlaufenden, aus geraden Abschnitten (20) bestehenden Lagen (5) gebildet ist, die durch gekrümmte Bahnen (4) verbunden sind, und entlang der Fahrbahn Zellen (7) fortbewegbar sind, die gegenseitig durch Verbindungsstäbe (9) miteinander verbunden sind, die einen zusammengesetzten Transporteur (6) bilden, dadurch gekennzeichnet, dass in jeder Lage (5) außer der zum Parken bestimmten Lage (8) in mindestens einem Bereich (3) des Ablagesystems (1) mindestens zwei Kettenräder angebracht sind, wovon mindestens eines ein Antriebs-Kettenrad (12) ist, über welche eine Walzenkette (10) läuft, die mit Antriebsblöcke (11) versehen ist, die in Ausnehmungen (19) mindestens eines Verbindungsstabes (9) des zusammengesetzten Transporteurs (6) zur Fortbewegung der Zellen (7) eingreifen, wobei das in die Ausnehmungen (19) eingreifende Profil der Antriebsblöcke (11) und das Profil der Ausnehmungen (19) der Verbindungsstäbe (9) so gestaltet sind, dass eine Abwälzung erfolgt, und dass im Bereich des Eingriffs der Antriebsblöcke (11) in die Ausnehmungen (19) der Verbindungsstäbe (9) Führungsleisten (14) vorgesehen sind, die höhenverstellbar sind und mit welchen die Walzenkette (10) abgestützt ist, um die Antriebsblöcke (11) in den Ausnehmungen (19) der Verbindungsstäbe (9) in Eingriff zu halten.

2. Mechanischer Antrieb nach Anspruch 1, dadurch gekennzeichnet, dass im Bereich (3) vier Kettenräder (12, 13, 15) untergebracht sind, über welche eine Walzenkette (10) läuft, wovon mindestens eines ein Antriebs-Kettenrad (12) ist, wobei die Antriebsblöcke (11) der Walzenkette (10) gleichzeitig in die Aushöhlungen (19) wenigstens zweier Verbindungsstäbe (9) des zusammengesetzten Transporteurs (6) eingreifen, die sich in zwei übereinanderliegenden Lagen (5, 8) befinden.

3. Mechanischer Antrieb nach Anspruch 2, dadurch gekennzeichnet, dass in mindestens einer weiteren benachbarten Lage (5) vier Kettenräder (12, 13, 15) untergebracht sind, über welche eine Walzenkette (10) läuft, wovon mindestens eine ein Antriebs-Kettenrad (12) ist, so dass jeweils ein Verbindungsstab (9) gleichzeitig mit zwei gegenüberliegenden Seiten mit Walzenketten (10) in Wirkverbindung steht.

4. Mechanischer Antrieb nach Anspruch 2 oder 3, dadurch gekennzeichnet, dass die momentan richtige gegenseitige Stellung der Zellen (7) in jeder Lage (5, 8) sichergestellt ist.

5. Mechanischer Antrieb nach einem der Ansprüche 2 bis 4, dadurch gekennzeichnet, dass die Synchronisierung der Bewegung der Zellen (7) in den einzelnen Lagen (5, 8) mechanisch erfolgt.

## Claims

1. Mechanical drive in a storage system (1), which is formed by a steel construction bearing a drivable path, and the drivable path is formed by a plurality of tiers (5) running over one another, consisting of straight sections (20) connected by curved paths (4), and movable along the drivable path are cells (7) which are mutually connected by connecting rods (9), which form a composite conveyor (6) characterized in that provided in each tier (5) in at least one area (3) of the storage system (1), except in the tier foreseen for parking (8), are at least two chain wheels, at least one of which is a drive chain wheel (12) over which a roller chain (10) runs, which is provided with drive elements (11) which engage in recesses (19) of at least one connecting rod (9) of the composite conveyor (6) for movement of the cells (7), the profile of the drive elements (11) engaging in the recesses (19) and the profile of the recesses (19) of the connecting rods (9) being designed in such a way that a rolling contact takes place, and in that guides (14) are provided in the area of engagement of the drive elements (11) in the recesses (19) of the connecting rods (9), which guides are height-adjustable and with which the roller chain (10) is supported, in order to keep the drive elements (11) engaged in the recesses (19) of the connecting rods (9).

2. Mechanical drive according to claim 1, characterized in that accommodated in the area (3) are four chain wheels (12, 13, 15), over which a roller chain (10) runs, of which at least one is a drive chain wheel (12), the drive elements (11) of the roller chain (10) engaging at the same time in the recesses (19) of at least two connecting rods (9) of the composite conveyor (6), which are located in two tiers (5, 8) lying one over the other.

3. Mechanical drive according to claim 2, characterized in that in at least one further adjacent tier (5) four chain wheels (12, 13, 15) are accommodated, over which a roller chain (10) runs, of which at least one is a drive roller chain wheel (12) so that in each case a connecting rod (9) is in active connection with roller chains (10) on two opposite sides at the same time.

4. Mechanical drive according to claim 2 or 3, characterized in that the momentary correct mutual positioning of cells (7) is ensured in each tier (5, 8).

5. Mechanical drive according to one of the claims 2 to 4, characterized in that the synchronization of the movement of the cells (7) in the individual tiers (5, 8) takes place mechanically.

## Revendications

1. Entraînement mécanique dans un système de rangement (1), formé d'une construction métallique portant une voie de roulement, la voie de roulement étant formée de plusieurs couches superposées (5) constituées de sections droites (20) reliées par des voies courbes (4), des cellules (7) étant déplaçables le long de la voie qui sont mutuellement reliées par des barres de liaison (9) formant un transporteur combiné, (6), caractérisé en ce que sur chaque couche (5), à l'extérieur des positions destinées au parcage (8), sur au moins une région (3) du système de rangement (1), au moins deux roues à chaîne sont disposées, desquelles au moins l'une est une roue à chaîne d'entraînement (12) sur laquelle passe une chaîne à rouleaux (10) munie de blocs d'entraînement (11), qui engrènent avec des évidements (19) d'au moins une barre de liaison (9) d'un transporteur combiné (6) pour le déplacement de la cellule (7), le profil d'engrènement du bloc d'entraînement (11) dans les évidements (19) et le profil des évidements (19) étant formés de telle manière qu'un roulement s'ensuit, et en ce que dans la région d'engrènement du bloc d'entraînement (11) dans les évidements (19) de la barre de liaison (9), des barres de guidage (14) sont prévues, réglables en hauteur, et par lesquelles la chaîne à rouleaux (10) est supportée, pour maintenir le bloc d'entraînement (11) en engrènement dans l'évidement (19) de la barre de liaison (9).

2. Entraînement mécanique selon la revendication 1, caractérisé en ce que dans la région (3), quatre roues à chaîne (12,13,15) sont disposées, par lesquelles passe une chaîne à rouleaux (10), desquelles au moins une est une roue à chaîne d'entraînement (12), le bloc d'entraînement (11) de la chaîne à rouleaux (10) étant en même temps engrené dans les évidements (19) d'au moins une deuxième barre de liaison (9) de transporteurs combinés (6) se trouvant sur deux couches (5,8) superposées.

3. Entraînement mécanique selon la revendication 2, caractérisé en ce que sur au moins une autre couche (5) voisine, quatre roues à chaîne (12,13,15) sont disposées, par lesquelles passe une chaîne à rouleaux (10), desquelles au moins une est une roue à chaîne d'entraînement (12), afin que chaque fois une barre de liaison (9) soit en liaison par deux côtés opposés avec des chaîne à rouleaux (10).

4. Entraînement mécanique selon l'une des revendications 2 ou 3, caractérisé en ce que la position mutuelle droite momentanée des cellules (7) dans chaque couche (5,8) est assurée.

5. Entraînement mécanique selon l'une des revendications 2 à 4, caractérisé en ce que la synchronisation du mouvement des cellules (7) dans une couche particulière (5,8) est obtenue mécaniquement.
